# EUROPÄISCHE PATENTANMELDUNG

(11) **EP 4 840 548 A1**
(43) Veröffentlichungstag der Anmeldung: **18.11.2026**
(21) Anmeldenummer: 25176995.6
(22) Anmeldetag: 16.05.2025
(51) Int. Cl.: B03B 9/06, H01M 4/04, H01M 10/54

(54) **VERFAHREN ZUM REZYKLIEREN VON ALKALIMETALLBATTERIE-PRODUKTIONSABFALL UND ALKALIMETALLBATTERIE-PRODUKTIONSABFALL-WIEDERGEWINNUNGSANLAGE**

(71) Anmelder: Duesenfeld GmbH, 38176 Wendeburg (DE)
(72) Erfinder: Deeg, Julian, 38102 Braunschweig (DE); Bußmann, Till, 30916 Isernhagen Ortsteil Altwarmbüchen (DE); Schrader, Sebastian, 38100 Braunschweig (DE)
(74) Vertreter: Gramm, Lins & Partner Patent- und Rechtsanwälte PartGmbB

(57) **Zusammenfassung**

Die Erfindung betrifft ein Verfahren zum Rezyklieren von Alkalimetallbatterie-Produktionsabfall in Form von Ausschuss-Elektrodenfolie (40), die eine Stromableiterfolie (24) und eine Beschichtung (27) der Stromableiterfolie (24) aufweist, wobei die Beschichtung (27) Aktivmaterial (16) und einen Binder (18) enthält, mit den Schritten Entschichten der Ausschuss-Elektrodenfolie (40), insbesondere mittels einer Prallmühle (44), eines Prallsichters und/oder einer Luftstrahlmühle, sodass Trenngut (46) entsteht, Klassieren des Trennguts (46), sodass eine Beschichtungsmaterial-Fraktion (52) und eine Folienfragment-Fraktion (50) erhalten werden, und Verwenden der Beschichtungsmaterial-Fraktion (52) zum Beschichten von Stromableiterfolie (24), sodass Elektrodenfolie (26) erhalten wird.

## Beschreibung

Die Erfindung betrifft ein Verfahren zum Rezyklieren von Alkalimetallbatterie-Produktionsabfall in Form von Ausschuss-Elektrodenfolie, die (i) eine Stromableiterfolie und (ii) eine Beschichtung der Stromableiterfolie aufweist, wobei (iii) die Beschichtung Aktivmaterial und einen Binder enthält. Gemäß einem zweiten Aspekt betrifft die Erfindung eine Alkalimetallbatterie-Produktionsabfall-Wiedergewinnungsanlage mit (A) einem Mischer zum Mischen und/oder Dispergieren von Beschichtungsmaterial, (B) einer Beschichtungsanlage zum Beschichten von Stromableiterfolie mit dem vom Mischer kommenden Beschichtungsmaterial, sodass Elektrodenfolie entsteht und optional (C) einer Entfernvorrichtung zum Entfernen eines Teils der Elektrodenfolie als Ausschuss-Elektrodenfolie.

Bei dem Herstellen von Alkalimetallbatterien wird Stromableiterfolie mit Beschichtungsmaterial beschichtet, das Aktivmaterial und einen Binder enthält. Der Binder dient dazu, das Aktivmaterial auf der Stromableiterfolie zu halten. Erreicht die so hergestellte Elektrodenfolie nicht die vorgegebene Qualität, so wird sie nicht zur Herstellung von Alkalimetallbatterien verwendet, sondern als Ausschuss-Elektrodenfolie entsorgt.

An das Beschichtungsmaterial werden hohe Anforderungen hinsichtlich etwaiger Verunreinigungen gestellt. In der Regel muss beispielsweise sichergestellt sein, dass der Gehalt an metallischem Kupfer und/oder Aluminium gering ist.

Es ist bekannt, die Ausschuss-Elektrodenfolie chemisch von der Stromableiterfolie zu trennen. Dadurch werden die Aluminium- und die Kupferfolie entfernt und so Verunreinigungen mit metallischem Kupfer und Aluminium vermieden. Das Beschichtungsmaterial wird nasschemisch behandelt, insbesondere mit verdünnter Säure und/oder Oxidationsmitteln. So werden Salze der teuren, an der elektrochemischen Reaktion beteiligten Metalle erhalten, die danach zur erneuten Herstellung von Aktivmaterial verwendet werden können.

Wünschenswert beim Rezyklieren von Alkalimetallbatterie-Produktionsabfall ist, dass das am Ende des Prozesses erhaltene Aktivmaterial zumindest im Wesentlichen die gleichen Eigenschaften hat wie das aus Rohstoffen hergestellte Aktivmaterial. In anderen Worten ist es wünschenswert, dass Alkalimetallbatterien, die unter Verwendung von rezykliertem Aktivmaterial hergestellt sind, zumindest im Wesentlichen die gleichen Eigenschaften hinsichtlich Zyklenfestigkeit und Entladefähigkeit aufweisen.

Wünschenswert ist zudem, dass das Rezyklieren von Alkalimetallbatterie-Produktionsabfall einen möglichst geringen CO₂-Fußabdruck hat und/oder möglichst kostengünstig durchführbar ist.

Der Erfindung liegt die Aufgabe zugrunde, das Rezyklieren von Alkalimetallbatterie-Produktionsabfall zu verbessern.

Die Erfindung löst das Problem durch ein Verfahren mit den Schritten (a) Entschichten der Ausschuss-Elektrodenfolie, insbesondere mechanisches Entschichten, sodass Trenngut entsteht, (b) Klassieren des Trennguts, sodass eine Beschichtungsmaterial-Fraktion und eine Folienfragment-Fraktion erhalten werden, und (c) Verwenden der Beschichtungsmaterial-Fraktion zum Beschichten von Stromableiterfolie, sodass Elektrodenfolie erhalten wird.

Gemäß einem zweiten Aspekt löst die Erfindung das Problem durch eine gattungsgemäße Alkalimetallbatterie-Produktionsabfall-Wiedergewinnungsanlage, die (D) eine Entschichtungsanlage zum Entschichten von Elektrodenfolie, insbesondere eine Prallmühle, einen Prallsichter und/oder eine Luftstrahlmühle, sodass Trenngut entsteht, wobei die Entschichtungsanlage in Materialflussrichtung der Elektrodenfolie hinter der Beschichtungsanlage und gegebenenfalls einer Entfernvorrichtung, angeordnet ist, und (E) eine Klassiervorrichtung zum Klassieren des Trennguts zum Erzeugen einer Beschichtungsmaterial-Fraktion und einer Folienfragment-Fraktion, wobei (F) die Klassiervorrichtung mit dem Mischer zum Zuführen zumindest von Teilen der Beschichtungsmaterial-Fraktion zum Mischer verbunden ist, und optional (G) eine Produktionsanlage zum Herstellen der Alkalimetallbatterien aus der Elektrodenfolie. Die Elektrodenfolie ist diejenige, die von der Beschichtungsanlage kommt.

Die Alkalimetallbatterie-Produktionsabfall-Wiedergewinnungsanlage ist zugleich eine Alkalimetallbatterie-Produktionsanlage.

Vorteilhaft an der Erfindung ist, dass eine deutlich kürzere Prozesskette beim Rezyklieren von Ausschuss-Elektrodenfolie möglich ist. So hat sich gezeigt, dass es möglich ist, die Folienbestandteile so gut von der Beschichtungsmaterial-Fraktion getrennt werden kann, dass die Beschichtungsmaterial-Fraktion so wenig Teile der Stromableiterfolie, insbesondere so wenig metallisches Kupfer und/oder Aluminium, enthält, dass mit dem Beschichtungsmaterial der Beschichtungsmaterial-Fraktion Alkalimetallbatterien hergestellt werden können, deren elektrische Eigenschaften sich im Wesentlichen nicht von solchen Alkalimetallbatterien unterscheiden, die ohne rezykliertem Beschichtungsmaterial hergestellt sind.

Vorteilhaft ist zudem, dass durch das Rezyklieren gemäß der Erfindung in der Regel deutlich weniger Reststoffe produziert werden als beim bekannten nasschemischen Rezyklieren. Das vermindert den CO₂-Fußabdruck des Rezyklierens der Ausschuss-Elektrodenfolie.

Im Rahmen der vorliegenden Beschreibung werden die Begriffe Rezyklieren und Wiedergewinnen synonym verwendet. Sowohl unter Rezyklieren als auch unter Wiedergewinnen wird verstanden, dass ein Material (hier: das Beschichtungsmaterial), das Bestandteil einer als Ausschuss betrachteten Komponente ist, in den Zustand versetzt wird, dass es Bestandteil dieser Komponente wird, ohne dass diese als Ausschuss betrachtet wird. Die Entscheidung, ob eine Elektrodenfolie eine Ausschuss-Elektrodenfolie ist oder nicht, wird anhand von Tests getroffen, die zumindest einen messbaren Parameter misst und ermittelt, ob der so gemessene Parameter in einem vorgegebenen Soll-Intervall liegt. Verneinendenfalls wird die Elektrodenfolie als Ausschuss-Elektrodenfolie betrachtet.

Bei der Herstellung von Elektrodenfolie wird die Stromableiterfolie in der Regel von einem Stromableiterfolien-Wickel abgewickelt, beschichtet und nach einer optionalen weiteren Verarbeitung, beispielsweise durch Trocknen, auf einen Elektrodenfolien-Wickel aufgewickelt. Von diesem Elektrodenfolien-Wickel wird die Elektrodenfolie dann abgewickelt, um daraus die Alkalimetallbatterie herzustellen. Es ist möglich, nicht aber notwendig, dass die Ausschuss-Elektrodenfolie ein Teil eines Wickels ist.

Insbesondere kann auch ein ganzer Wickel als Ausschuss-Elektrodenfolie betrachtet werden.

Unter der Stromableiterfolie wird eine elektrisch leitfähige Folie verstanden, beispielsweise aus Aluminium, Kupfer oder einer Legierung zumindest eines dieser Metalle, die in der Alkalimetallbatterie dazu dient, bei der elektrochemischen Reaktion entstehende Elektronen ab- oder zuzuführen.

Die Beschichtung besteht aus Beschichtungsmaterial. Das Beschichtungsmaterial kann neben dem Aktivmaterial und den Binder zudem Additive enthalten, beispielsweise Ruß und/oder Kohlenstoffnanoröhren.

Unter dem Aktivmaterial wird dasjenige Material verstanden, dass an der elektrochemischen Reaktion der Alkalimetallbatterie teilnimmt, aufgrund der die Alkalimetallbatterie elektrische Energie gespeichert.

Unter einer Alkalimetallbatterie wird eine Batterie, insbesondere Akkumulator, verstanden, bei dem die elektrische Nutzenergie durch eine elektrisch chemische Reaktion eines Alkalimetalls, insbesondere Lithium oder Natrium, bereitgestellt wird. Die Alkalimetallbatterie enthält vorzugsweise(i) einen flüssigen Elektrolyten, der Leitsalz-Lösungsmittel und darin gelöstes Leitsalz oder (ii) einen festen Elektrolyten, der für Alkalimetallionen leitfähig ist, enthält.

Unter dem Entschichten wird insbesondere ein mechanisches Entschichten verstanden. Das Entschichten ist ein Einwirken auf die Ausschuss-Elektrodenfolie, sodass sich Beschichtung von der Ausschuss-Elektrodenfolie löst. In anderen Worten ist das Entschichten ein Aufheben der Verbindung zwischen Beschichtung und Stromableiterfolie durch mechanisches Einwirken. Insbesondere ist das Entschichten kein Zerstören oder chemisches Auf- oder Anlösen des Binders. Insbesondere ist das Entschichten kein Zerstören des Binders und/oder der Verbindung zwischen Beschichtung und Stromableiterfolie durch, insbesondere ausschließlich durch, thermische Einwirkung.

Insbesondere umfasst das Entschichten ein Trennen von Partikeln, die vom Binder verbunden sind. Das Entschichten kann, zumindest auch, durch per Zerkleinern erfolgen und/oder ein Verkleinern umfassen. Beim Zerkleinern, also einem bewirken einer Verschiebung der Partikelgrößenverteilung hin zu kleineren Partikeln durch Lösen des Stoffverbunds (und nicht etwa durch Demontieren).

Vorzugsweise wird das Entschichten so durchgeführt, dass sich zumindest 50%, insbesondere zumindest 60%, vorzugsweise zumindest 70%, bevorzugt zumindest 80%, besonders bevorzugt zumindest 90%, insbesondere bevorzugt zumindest 95%, der Beschichtung von der Ausschuss-Elektrodenfolie löst. Die Prozentangaben beziehen sich auf Gewichtsprozent.

Unter einer Prallmühle wird eine Vorrichtung verstanden, mittels der die Beschichtung zumindest teilweise von der Stromableiterfolie durch Aufbringen von Prallbeanspruchung getrennt wird. Statt Prallmühle könnte auch Schlagrotormühle gesagt werden. Die Prallmühle besitzt vorzugsweise Schlagelemente aus Metall, beispielsweise Stahl, bevorzugt gehärtetem Stahl.

Unter dem Klassieren wird das Trennen eines dispersen Feststoffgemisches in Fraktionen verstanden, insbesondere ein Bilden von zumindest zwei Fraktionen anhand eines Klassierkriteriums. Das Klassierkriterium ist beispielsweise die Partikelgröße, die Partikeldichte, die Sinkgesdchwindigkeit und/oder der gewichtsspezifische Luftwiderstand. Das Klassieren kann in einem, 2 oder mehreren Schritten erfolgen.

Günstig ist es, wenn das Klassieren ein Sieben ist oder umfasst. Beim Sieben ist das Klassierkriterium die Partikelgröße.

Alternativ oder zusätzlich kann das Klassieren ein Sichten sein oder umfassen. Beim Sichten ist das Klassierkriterium gewichtsspezifische Luftwiderstand. Die Tatsache, dass die Beschichtungsmaterial-Fraktion und die Folienfragment-Fraktion auch durch Sichten voneinander getrennt werden können, ist deshalb überraschenderweise im vorliegenden Fall möglich, weil die beiden zu trennenden Fraktionen aus Partikeln bestehen, deren Dichte sich zwischen den Fraktionen unterscheidet, die aber in der Regel innerhalb der Fraktion gleich sind. Es ist daher möglich und bevorzugt, durch Sichten zumindest überwiegend gemäß dem Klassierkriterium der Partikelgröße zu klassieren. Zwar wird beim Sichten auch nach der Dichte und der Form der Partikel klassiert, es hat sich aber gezeigt, dass sowohl Dichte als auch Form der Partikel innerhalb der Beschichtungsmaterial-Fraktion und die Folienfragment-Fraktion hinreichend homogen sind, sodass in guter Näherung auch durch Sichten nach der Partikelgröße klassiert werden kann.

Vorzugsweise wird das Klassieren so durchgeführt, dass in guter Näherung alle Partikel der Beschichtungsmaterial-Fraktion kleiner sind als die Trennpartikelgröße. Das wird insbesondere dadurch erreicht, dass das Klassieren ein Sieben umfasst.

Das Klassierkriterium ist, ob ein Partikel eine Partikelgröße hat, die größer ist als eine vorgegebene Trennpartikelgröße. In anderen Worten wird vorzugsweise so klassiert, dass die Partikelgröße in der Beschichtungsmaterial-Fraktion, insbesondere zu zumindest 95 Gewichtsprozent, insbesondere zu zumindest 97,5 Gewichtsprozent, vorzugsweise zu zumindest 99 Gewichtsprozent, insbesondere zu zumindest 99,9 Gewichtsprozent, kleiner ist als die Trennpartikelgröße und/oder die Partikelgröße in der Folienfragment-Fraktion, insbesondere zu zumindest 95 Gewichtsprozent, insbesondere zu zumindest 97,5 Gewichtsprozent, größer ist als die Trennpartikelgröße.

Der Erfindung liegt unter anderem die Erkenntnis zugrunde, dass das Trennen anhand der Partikelgröße (als Äquivalentdurchmesser gemessen nach ISO 13320: 2020) das Beschichtungsmaterial so effektiv von den vor den Folien-Fragmenten trennen kann, dass eine direkte Wiederverwendung des Beschichtungsmaterial, also des Aktivmaterials, des Binders und gegebenenfalls der Additive, möglich ist, ohne dass so hergestellte Alkalimetallbatterien signifikant schlechtere elektrische Eigenschaften haben als Alkalimetallbatterien, die ohne recyceltes Material hergestellt wurden. Der Grund dafür ist, dass das Entschichten so durchgeführt werden kann, dass sich der Durchmesser der Folienfragmentbestandteile deutlich vom Partikeldurchmesser des Beschichtungsmaterials unterscheidet.

Unter der Beschichtungsmaterial-Fraktion wird eine Fraktion verstanden, bei der Folienfragmente gegenüber der Ausschuss-Elektrodenfolie um zumindest den Faktor 10 abgereichert ist. Hierunter wird insbesondere verstanden, dass der Anteil an Stromableiterfolie in Gewichtsprozent an der Ausschuss-Elektrodenfolie zumindest um den 10 größer ist als der Anteil an Stromableiterfolie oder deren Teile in der Beschichtungsmaterial-Fraktion. Vorzugsweise sind Folienfragmente in der Beschichtungsmaterial-Fraktion gegenüber der Ausschuss-Elektrodenfolie um zumindest den Faktor 20, zum Faktor 30, vorzugweise Faktor 50, besonders bevorzugt Faktor 100, abgereichert.

Unter dem Verwenden der Beschichtungsmaterial-Fraktion zum Beschichten von Stromableiterfolie, sodass Elektrodenfolie erhalten wird, wird insbesondere verstanden, dass die Beschichtungsmaterial-Fraktion nicht nasschemisch und/oder nicht thermisch, insbesondere nicht pyrolytisch, behandelt wird, bevor die Beschichtungsmaterial-Fraktion erneut zum Beschichten von Stromableiterfolie verwendet wird. Unter dem Merkmal, dass die Beschichtungsmaterial-Fraktion nicht thermisch, insbesondere nicht pyrolytisch, behandelt wird, wird insbesondere verstanden, dass der Binder im Wesentlichen (also zu zumindest 95 Gewichtsprozent nicht) nicht zumindest auch durch Wärmeeinwirkung zersetzt wird. So wird insbesondere die Bildung gasförmiger Fluorverbindung, beispielsweise Fluorwasserstoff, vermieden, die das Beschichtungsmaterial schädigen könnten. Vorzugsweise wird die Beschichtungsmaterial-Fraktion nicht auf eine Temperatur von 80°C oder mehr erhitzt.

Vorzugsweise wird die Beschichtungsmaterial-Fraktion zumindest überwiegend, vorzugsweise zu zumindest 70 Gewichtsprozent, bevorzugt zu zumindest 80 Gewichtsprozent, besonders bevorzugt zu zumindest 90 Gewichtsprozent, vor dem Verwenden zum Beschichten von Stromableiterfolie nicht so behandelt, dass eine Oxidationszahl von Bestandteilen des Aktivmaterials, beispielsweise der NMC-Kristalle, geändert wird.

Es ist möglich, nicht aber notwendig, dass das Verwenden der Beschichtungsmaterial-Fraktion am gleichen Ort erfolgt wie das Entschichten und/oder das Klassieren. Beispielsweise kann, wie gemäß einer bevorzugten Ausführungsform vorgesehen, das Entschichten und/oder Klassieren an einem Ort erfolgen, der zumindest 1 km, insbesondere zumindest 10 km, von dem Ort entfernt ist, an dem die Beschichtungsmaterial-Fraktion zum Beschichten von Stromableiterfolie verwendet wird.

Unter einer Entschichtungsanlage wird insbesondere eine Anlage verstanden, die nicht nur in der Lage ist, sondern dazu ausgebildet ist, die Beschichtung von der Ausschuss-Elektrodenfolie zu entfernen. Vorzugsweise ist die Entschichtungsanlage ausgebildet zum Entschichten der Ausschuss-Elektrodenfolie durch mechanisches Einwirken. Vorzugsweise ist die Entschichtungsanlage nicht zum thermischen Einwirken auf die Ausschuss-Elektrodenfolie ausgebildet. Zwar ist eine Erwärmung der Ausschuss-Elektrodenfolie unvermeidlich, dass Abtrennen der Beschichtung erfolgt aber nicht durch thermisches Einwirken. Die Entschichtungsanlage ist oder enthält vorzugsweise eine Prallmühle, einen Prallsichter, eine Schneidmühle, eine Sichtermühle, eine Hammermühle, eine Mühle mit Mahlkörpern und/oder eine Luftstrahlmühle.

Gemäß einer Ausführungsform enthält das Verfahren den Schritt des Trennens einer Kathode von einer Anode, sodass zwei Ausschuss-Elektrodenfolien erhalten werden. Ein Verfahren zum Herstellen von Alkalimetallbatterien kann den Schritt des Verbindens einer Katode mit einer Anode, sodass ein Elektroden-Separator-Verbund, beispielsweise ein gerollter Elektroden-Separator-Verbund (engl.: Swiss Roll oder Jelly Roll), entsteht, aufweisen. Um das Beschichtungsmaterial mit hoher Reinheit wiedergewinnen zu können, ist es vorteilhaft, zunächst diesen Elektrodenverbund aufzutreiben, sodass Kathode und Anode erhalten werden, und danach die Kathode als Ausschuss-Elektrodenfolie gemäß der Schritte von Anspruch 1 zu recyceln und/oder die Anode als Ausschuss-Elektrodenfolie gemäß der Schritte von Anspruch 1 zeitlich und/oder räumlich getrennt von der Kathode zu recyceln.

Vorzugsweise werden die in Anspruch 1 genannten Schritte in ihrer angegebenen Reihenfolge durchgeführt. Auch andere Reihenfolgen sind aber möglich. Beispielsweise könne das Entschichten und das Klassieren gleichzeitig durchgeführt werden. Das erfolgt beispielsweise mittels eines Prallsichters und/oder eines Luftstrahlsieb.

Vorzugsweise enthält das Aktivmaterial NMC-Kristalle, also Kristalle aus Lithium-Nickel-Mangan-Cobalt-Oxid. NMC-Kristalle sind aufwendig herzustellen, daher ist es besonders günstig, wenn diese beim Rezyklieren wiedergewonnen werden können, ohne dass sie neu synthetisiert werden müssen. Alternativ enthält das Aktivmaterial LiFePO₄, NaFePO₄, Lithium-Nickel-Mangan-Cobaltoxid (LiNi_{1-x-y}Mnₓ Co_{y}O₂), Lithium-Titanium-Oxid, Lithium-Mangan-Eisen-Phosphat, Graphit, Graphit-Silizium, Silizium, Nickel-Cobalt-Aluminium-Oxid, Na₂MnFe(CN)₆, harter (nicht graphitisierter) Kohlenstoff und/oder metallisches Lithium.

Gemäß einer Ausführungsform umfasst oder ist das Entschichten zumindest teilweise ein Zerkleinern. Beim Zerkleinern kommt es zu einer mechanischen Einwirkung auf die Ausschuss-Elektrodenfolie, wodurch sich Beschichtungsmaterial ablöst. In diesem Fall wird das Zerkleinern vorzugsweise mit einer Schneidmühle durchgeführt. Die Schneidmühle ist eine Ausführungsform einer Zerkleinerungsvorrichtung.

Alternativ oder zusätzlich ist es möglich, dass die Ausschuss-Elektrodenfolie vor dem Entschichten zerkleinert wird.

Vorzugsweise liegt die Ausschuss-Elektrodenfolie vor dem Entschichten in Form von Fragmenten vor, deren Partikelgröße in Form des Hüllkugeldurchmessers höchstens 100 mm, insbesondere höchstens 50 mm, beträgt. Der Hüllkugeldurchmesser ist der Durchmesser der kleinstmöglichen gedachten Kugel, die das Partikel vollständig umgibt. Das kann durch Zerkleinern erreicht werden.

Wenn das Verfahren ein Zerkleinern der Ausschuss-Elektrodenfolie umfasst, ist es günstig, wenn das Verfahren den Schritt des Klassierens nach dem Zerkleinern und vor dem Entschichten umfasst. Vorzugsweise wird so klassiert, dass die Partikelgröße des Trennguts in Form des Hüllkugeldurchmessers höchstens 100 mm, insbesondere höchstens 50 mm, beträgt.

Die Beschichtungsmaterial-Fraktion hat eine Beschichtungsmaterialfraktion-Partikelgrößenverteilung, die das Volumen der Partikel unterhalb eines Äquivalentdurchmessers über den Äquivalentdurchmesser aufträgt.

In anderen Worten ist in der Beschichtungsmaterialfraktion-Partikelgrößenverteilung auf der x-Achse der Äquivalentdurchmesser aufgetragen der aus einem Laserbeugungsverfahren nach ISO 13320:2020 ermittelt wird. Auf der y-Achse ist der auf 1 normierte Volumentanteil der Partikel aufgetragen, deren Äquivalentdurchmesser höchstens diesem Äquivalentdurchmesser entsprechen. Der Äquivalentdurchmesser wird in einer Suspension gemessen, wobei die verwendete Flüssigkeit kein Lösungsmittel für den Binder und/oder eines der Additive ist.

Das Entschichten und/oder das Klassieren wird gemäß einer Ausführungsform so durchgeführt, dass die Beschichtungsmaterialfraktion-Partikelgrößenverteilung einer Primärpartikel-Partikelgrößenverteilung entspricht. Hierunter wird insbesondere verstanden, dass die Mediane der beiden Partikelgrößenverteilungen (x₅₀-Wert) um höchstens 100%, insbesondere höchstens 50%, insbesondere um höchstens 35 %, voneinander abweichen. Die Abweichung wird berechnet, indem der größere Wert der Mediane durch den kleineren Wert geteilt wird.

Die Primärpartikel-Partikelgrößenverteilung ist die Partikelgrößenverteilung der Partikel im Aktivmaterial der Beschichtung. Wenn die Beschichtungsmaterialfraktion-Partikelgrößenverteilung zumindest im Wesentlichen der Primärpartikel-Partikelgrößenverteilung entspricht, kann erreicht werden, dass eine unter Verwendung von recycelten Beschichtungsmaterial hergestellte Alkalimetallbatterie sich hinsichtlich ihrer Speicherkapazität und/oder Entladefähigkeit nicht signifikant von Alkalimetallbatterien unterscheidet, die ohne recycelte Beschichtungsmaterial hergestellt wurden.

Alternativ oder zusätzlich werden das Entschichten und/oder das Klassieren so durchgeführt, dass der Median der Beschichtungsmaterial-Partikelgrößenverteilung höchstens 50 µm, insbesondere höchstens 30 µm, bevorzugt höchstens 25 µm, insbesondere höchstens 10 µm, beträgt.

Vorzugsweise wird das Klassieren so durchgeführt, dass in der Beschichtungsmaterial-Fraktion höchstens 0,1 Gewichtsprozent, insbesondere höchstens 0,01 Gewichtsprozent, der Partikel größer sind als eine Trennpartikelgröße xₜᵣₑₙₙ, wobei die Trennpartikelgröße höchstens das Fünffache einer Aktivmaterial-Partikelgröße x_{AM} in Form der x₉₀-Partikelgröße des Aktivmaterials beträgt. Die x₉₀-Partikelgröße ist diejenige durch Laserbeugung nach ISO ISO 13320:2020 ermittelte Größe, für die gilt, dass 90 Volumenprozent aller Partikel höchstens diese Größe haben.

Vorzugsweise umfasst das Klassieren ein Siebklassieren, wobei eine Maschenweite höchstens 100 µm, insbesondere höchstens 80 µm, insbesondere höchstens 65 µm, beträgt. Vorteilhaft am Siebklassieren ist, dass weitgehend ausgeschlossen werden kann, dass Partikel das Sieb passieren, die größer sind als die Maschenweite.

Es ist möglich, nicht aber notwendig, dass das Klassieren neben dem Siebklassieren weitere Klassierschritte umfasst, beispielsweise Sichten.

Gemäß einer Ausführungsform umfasst das Verfahren eine Magnetabscheidung nach dem Entschichten und vor dem Verwenden der Beschichtungsmaterial-Fraktion zum Beschichten von Stromableiterfolie. Mittels Magnetabscheidung wird beispielsweise magnetischer Abrieb entfernt, der beim Entschichten entstanden ist.

Gemäß einer Ausführungsform wird das Klassieren so durchgeführt, dass ein Aluminium-Gehalt an metallischem Aluminium in der Beschichtungsmaterial-Fraktion höchstens 1 Gewichtsprozent, bevorzugt höchstens 0,5 Gewichtsprozent, besonders bevorzugt höchstens 0,254 Gewichtsprozent, beträgt. Es hat sich herausgestellt, dass ein niedriger Aluminium-Gehalt die elektrischen Eigenschaften einer Alkalimetallbatterie verbessert, die unter Verwendung von recyceltem Beschichtungsmaterial hergestellt wird.

Gemäß einer Ausführungsform wird das Klassieren so durchgeführt, dass ein Kupfer-Gehalt an metallischem Kupfer in der Beschichtungsmaterial-Fraktion höchstens 1 Gewichtsprozent, insbesondere höchstens 0,5 Gewichtsprozent, beträgt. Es hat sich herausgestellt, dass ein niedriger Kupfer-Gehalt die elektrischen Eigenschaften einer Alkalimetallbatterie verbessert, die unter Verwendung von recyceltem Beschichtungsmaterial hergestellt wird.

Gemäß einer Ausführungsform wird das Klassieren so durchgeführt, dass ein Eisen-Gehalt an Eisen (metallisch oder gebunden) in der Beschichtungsmaterial-fraktion höchstens 0,1 Gewichtsprozent, insbesondere höchstens 0,05 Gewichtsprozent, beträgt. Es hat sich herausgestellt, dass ein niedriger Eisen-Gehalt die elektrischen Eigenschaften einer Alkalimetallbatterie verbessert, die unter Verwendung von recyceltem Beschichtungsmaterial hergestellt wird. Das gilt vor allem dann, wenn das Aktivmaterial keine Eisenverbindung, beispielsweise Lithiumeisenphosphat, enthält.

Gemäß einer Ausführungsform wird das Klassieren so durchgeführt, dass ein Chrom-Gehalt an Chrom (metallisch oder gebunden) in der Beschichtungsmaterial-Fraktion höchstens 0,1 Gewichtsprozent, insbesondere höchstens 0,05 Gewichtsprozent, beträgt. Es hat sich herausgestellt, dass ein niedriger Chrom-Gehalt die elektrischen Eigenschaften einer Alkalimetallbatterie verbessert, die unter Verwendung von recyceltem Beschichtungsmaterial hergestellt wird. Chrom ist ein häufiger Legierungsbestandteil von Stählen und kann im Abrieb enthalten sein, der beim Entschichten entstanden ist.

Sind der Eisen- und/oder der Chromgehalt zu hoch, wird das Entschichten mit geringerer Beanspruchungsintensität durchgeführt. Beispielsweise wird die Drehzahl bei einer Prallmühle vermindert.

Gemäß einer Ausführungsform wird das Klassieren so durchgeführt, dass zwei oder mehr Beschichtungsmaterial-Sub-Fraktionen erhalten werden, wobei für zumindest eine der Beschichtungsmaterial-Sub-Fraktionen gilt, dass sie den oben angegebenen Aluminium-Gehalt, Kupfer-Gehalt und/oder Eisen-Gehalt hatte. Die zumindest eine andere Beschichtungsmaterial-Sub-Fraktion kann ein Aluminium-Gehalt, Kupfer-Gehalt und/oder Eisen-Gehalt haben, der höher ist.

Beispielsweise werden die zumindest zwei Beschichtungsmaterial-Sub-Fraktionen durch Sieben mit Sieben unterschiedlicher Siebschnitt erzeugt. Alternativ oder zusätzlich kann das Klassieren zusätzlich ein Sichten umfassen, bei dem aus der Beschichtungsmaterial-Fraktion die Beschichtungsmaterial-Sub-Fraktionen erzeugt werden.

Gemäß einer Ausführungsform umfasst das Verfahren den Schritt des Trocknens der Ausschuss-Elektrodenfolie vor dem Entschichten. Umfasst das Verfahren ein Zerkleinern, so erfolgt das Trocknen vorzugsweise auch vor dem Zerkleinern. Das Trocknen wird vorzugsweise so durchgeführt, dass ein Gehalt an Lösungsmitteln höchstens 20 Gewichtsprozent, insbesondere höchstens 5 Gewichtsprozent, besonders bevorzugt höchstens 1 Gewichtsprozent, jeweils gemessen bei 105°C nach DIN EN 14346.

Gemäß einer Ausführungsform wird das Zerkleinern, Entschichten und/oder Klassieren unter Inertgas durchgeführt. Auf diese Weise wird eine Degradation des Aktivmaterials weitgehend verhindert.

Günstig ist es, wenn das Entschichten, das Klassieren und/oder, sofern vorhanden, das Zerkleinern in einer Atmosphäre erfolgen, die höchstens 0,1 Gewichtsprozent Wasser enthält. Wasser kann die Eigenschaften des Aktivmaterials verschlechtern.

Vorzugsweise hat das Beschichtungsmaterial nach dem Entschichten, insbesondere nach dem etwaigen Zerkleinern, zumindest im Wesentlichen keinen Kontakt mit Fluorwasserstoff. Hierunter wird insbesondere verstanden, dass höchstens 0,1 Gewichtsprozent, insbesondere höchstens 0,01 Gewichtsprozent, des Beschichtungsmaterials mit Fluorwasserstoff reagiert. Fluorwasserstoff kann entstehen, wenn Binder temperaturbedingt zersetzt.

Vorzugsweise wird ein Teil der Folienfragment-Fraktion zum erneuten Entschichten zurückgeführt, insbesondere in die Entschichtungsanlage. Das Entschichten, insbesondere durch Prallzerkleinerung, ist ein stochastischer Prozess, bei dem nicht auf alle Partikel in der gleichen Weise mechanisch eingewirkt wird. Partikel, die nicht hinreichend entschichtet wurden, sind größer und/oder schwerer als Partikel, die hinreichend entschichtet wurden. Vorzugsweise wird daher der Teil der Folienfragment-Fraktion zugeführt, dessen Partikelgröße (gemessen als Maschenweite (Siebmaß) oder als aerodynamischer Durchmesser) größer ist als eine vorgegebene Rückführ-Trennpartikelgröße. Die Rückführ-Trennpartikelgröße ist zumindest die Trennpartikelgröße, beispielsweise zumindest 100 µm.

Vorzugsweise umfasst das Verfahren die Schritte (a) Beschichten von Stromableiterfolie mit Beschichtungsmaterial, sodass Elektrodenfolie entsteht, (b) Entfernen eines Teils der Elektrodenfolie als Ausschuss-Elektrodenfolie, (c) danach Durchführen der Schritte (a) bis (c) von Anspruch 1, (d) danach Herstellen der Alkalimetallbatterien unter Verwendung der Beschichtungsmaterial-Fraktion. In diese Ausgestaltung ist das Verfahren auch ein Verfahren zum Herstellen von Alkalimetallbatterien.

Vorteilhaft an diesem Verfahren ist, dass weniger Ausschuss produziert wird. Es hat sich gezeigt, dass zumindest bis zu einem Gehalt an recyceltem Beschichtungsmaterial von 26 Gewichtsprozent die elektrischen Eigenschaften der Alkalimetallbatterie in guter Näherung nicht von Alkalimetallbatterien unterscheiden, die ohne recyceltes Beschichtungsmaterial hergestellt wurden.

Das Entfernen von Ausschuss-Elektrodenfolie kann beispielsweise ein Heraustrennen von Teilen der Elektrodenfolie umfassen. Vorzugsweise umfasst das Verfahren den Schritt des, insbesondere ortsaufgelösten, Erfassen zumindest eines Qualitätsparameters der Elektrodenfolie und Entfernen von Bereichen der Elektrodenfolie, in denen der Qualitätsparameter außerhalb eines vorgegebenen Soll-Intervalls liegt. Der Qualitätsparameter kann beispielsweise eine Schichtdicke, das Flächengewicht, der spezifische elektrische Widerstand, oder das Vorhandensein von Beschädigungen wie Risse oder Wellen sein.

Vorzugsweise umfasst das Verfahren den Schritt, insbesondere vor Schritt (a) des Beschichtens der Stromableiterfolie, Mischen von Aktivmaterial, Binder und gegebenenfalls Binder-Lösungsmittel. Auf diese Weise kann ein pastöses Material gewonnen werden, mit dem Stromableiterfolie beschichtet wird.

Vorzugsweise umfasst das Verfahren den folgenden Schritt: nach dem Beschichten und vor dem Entfernen des Teils der Elektrodenfolie Trocknen, Kalandrieren und/oder Zuschneiden und/oder Konfektionieren der Elektrodenfolie.

Vorzugsweise umfasst das Verfahren das Vermischen der Beschichtungsmaterial-Fraktion mit Primär-Beschichtungsmaterial, sodass das Beschichtungsmaterial erhalten wird, mit dem die Stromableiterfolie beschichtet wird. Unter dem Primärwird Beschichtungsmaterial verstanden, dass aus Rohmaterial synthetisiert wurde. In anderen Worten enthält das Primär-Beschichtungsmaterial kein im Rahmen des beschriebenen Verfahrens recyceltes Material.

Der Recycling-Anteil an Recycling-Beschichtungsmaterial, also an Material, das die Schritte gemäß Anspruch 1 durchlaufen hat, beträgt vorzugsweise zumindest 1 Gewichtsprozent, insbesondere zumindest 5 Gewichtsprozent, insbesondere zumindest 15 Gewichtsprozent. Es hat sich gezeigt, dass eine Alkalimetallbatterie mit einem Recycling-Anteil von 26 Gewichtsprozent im Wesentlichen die gleichen Eigenschaften hinsichtlich der Lebensdauer und Speicherfähigkeit hat wie eine Alkalimetallbatterie, die ohne Recycling-Beschichtungsmaterial hergestellt wurde.

Das Beschichtungsmaterial, das zur Herstellung der Alkalimetallbatterie verwendet wird und das Recycling-Beschichtungsmaterial enthält, hat einen Beschichtungsmaterial-Binderanteil an Binder. Die Beschichtungsmaterial-Fraktion unmittelbar nach dem Trennen der Beschichtungsmaterial-Fraktion von der Folienfragment-Fraktion hat einen Recycling-Binderanteil. Bei einem idealen Entschichten und Klassieren ist der Recycling-Binderanteil gleich dem Beschichtungsmaterial-Binderanteil.

Vorzugsweise wird das Klassieren so durchgeführt, dass der Recycling-Binderanteil zumindest die Hälfte, insbesondere zumindest zwei Drittel, vorzugsweise zumindest drei Viertel, insbesondere zumindest 80 %, besonders bevorzugt zumindest 85 %, des Beschichtungsmaterial-Binderanteils beträgt. Alternativ oder zusätzlich beträgt der Recycling-Binderanteil vorzugsweise höchstens das Doppelte, insbesondere höchstens das 1,25-fache, insbesondere höchstens das 1,15-fache des Beschichtungsmaterial-Binderanteils. In anderen Worten wird der Binderanteil nach dem Entschichten und Klassieren des Trennguts im Wesentlichen nicht verändert.

Insbesondere umfasst das Verfahren kein Entfernen von Binder aus der Beschichtungsmaterial-Fraktion in wesentlichem Umfang. Hierunter wird insbesondere verstanden, dass höchstens 15 Gewichtsprozent, insbesondere höchstens 10 Gewichtsprozent, insbesondere höchstens 5 Gewichtsprozent, des Binders aus der Beschichtungsmaterial-Fraktion entfernt werden, bevor diese zum Beschichten von Stromableiterfolie verwendet wird. Insbesondere umfasst das Verfahren kein Auswaschen von Binder und/oder des Binders mit einem Lösungsmittel und/oder kein thermisches Zersetzen von Binder und/oder des Binders.

Das Beschichten im Rahmen des Verfahrens zum Herstellen von Alkalimetallbatterien wird vorzugsweise so durchgeführt, dass eine Beschichtungsdicke d₂₇ der Beschichtung der Elektrode zumindest 1,5-fach, vorzugsweise doppelt, bevorzugt zumindest dreifach, bevorzugt zumindest vierfach, besonders bevorzugt zumindest fünffach, so groß ist wie die Trennpartikelgröße. Die Beschichtungsdicke d₂₇ ist die Dicke der Beschichtung nach dem Beschichten der Stromableiterfolie mit der Beschichtung, insbesondere nach einem Kalandrieren und gegebenenfalls nach einem Trocknen der Beschichtung. Alternativ oder zusätzlich ist ein Gehalt an Partikeln, die größer sind als die Beschichtungsdicke, vorzugsweise kleiner als 10⁻⁴ Gewichtsprozent, vorzugsweise kleiner als 10⁻⁵ Gewichtsprozent. Zu große Partikel können die Stromableiterfolie und/oder den Separator durchstoßen, was zum Versagen der Batterien führen kann.

Die Alkalimetallbatterie-Produktionsabfall-Wiedergewinnungsanlage kann auch Alkalimetallbatterie-Produktionsanlage genannt werden. Die Alkalimetallbatterie-Produktionsanlage kann zudem eine Beschichtungsanlage zum Aufbringen des Beschichtungsmaterials auf die Stromableiterfolie aufweisen. Gemäß einer Ausführungsform besitzt diese Alkalimetallbatterie-Produktionsanlage einen Trockner zum Trocknen der beschichteten Elektrodenfolie und/oder einen Kalander zum Kalandrieren der Elektrodenfolie, sodass diese eine Beschichtungsdicke hat. Die Alkalimetallbatterie-Produktionsanlage kann zudem einen Zuschneider aufweisen, der ausgebildet ist zum Zuschneiden der kalandrierten Elektrodenfolie auf eine vorgegebene Größe. Die so zugeschnittenen Elektrodenfolien für Kathode und Anode werden mit einem Separator zu einem Elektroden-Separator-Verbund zusammengeführt. Dieser wird dann in ein Gehäuse oder eine Hülle verpackt und mit Elektrolyt versehen, sodass die Alkalimetallbatterie entsteht. Vorteilhaft an einer solchen Alkalimetall-Produktionsanlage ist, dass sie weniger Ausschuss produziert. Das führt in der Regel zu einer kostengünstigeren und/oder effizienteren Herstellung.

Vorzugsweise besitzt die Alkalimetallbatterie-Produktionsvorrichtung eine Zerkleinerungsvorrichtung zum Zerkleinern der Ausschuss-Elektrodenfolie, sodass Zerkleinerungsmaterial erhalten wird. Die Zerkleinerungsvorrichtung ist vorzugsweise mit der Entschichtungsanlage verbunden, vorzugsweise mittels einer staubdichten Leitung.

Die Zerkleinerungsvorrichtung ist vorzugsweise in Materialflussrichtung der Ausschuss-Elektrodenfolie hinter der Beschichtungsanlage - und gegebenenfalls der Entfernvorrichtung - angeordnet. Die Zerkleinerungsvorrichtung in Materialflussrichtung des Zerkleinerungsmaterials vorzugsweise vor der Entschichtungsanlage angeordnet ist. Die Zerkleinerungsvorrichtung ist insbesondere ausgebildet zum Schneidzerkleinern oder Reibzerkleinern.

Im Folgenden wird die Erfindung anhand der beigefügten Rechnungen näher erläutert. Dabei zeigt
- Figur 1: ein Flussdiagramm eines erfindungsgemäßen Verfahrens und einer erfindungsgemäßen Alkalimetallbatterie-Produktionsabfall-Wiedergewinnungsanlage und
- Figur 2: eine schematische Ansicht einer erfindungsgemäßen Alkalimetallbatterie-Produktionsabfall-Wiedergewinnungsanlage oder Alkalimetallbatterie-Produktionsanlage zum Durchführen eines erfindungsgemäßen Verfahrens.

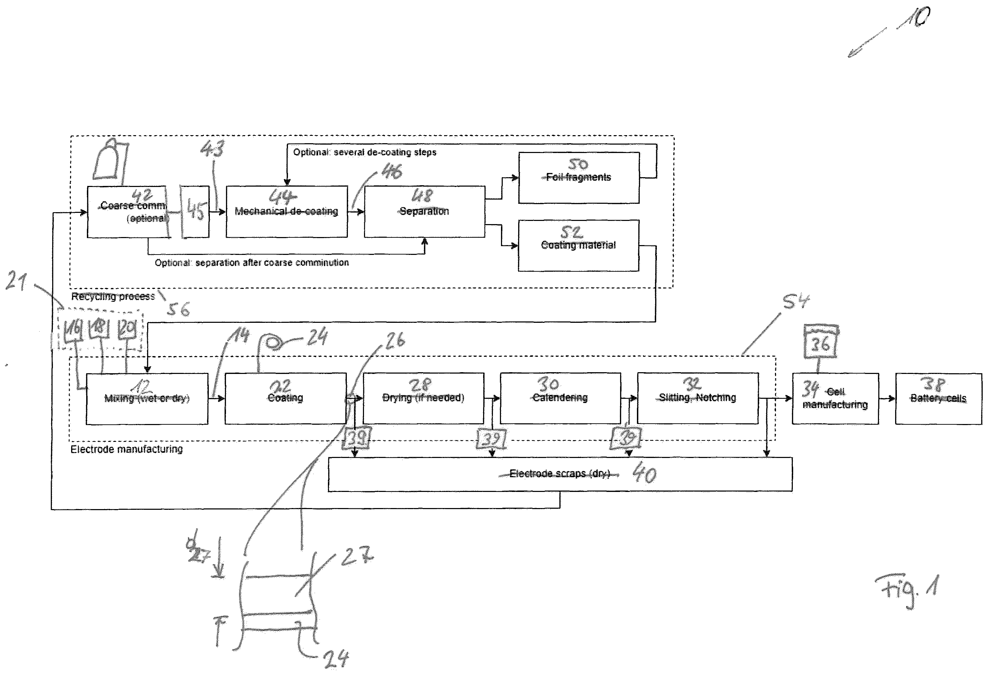

Figur 1 zeigt eine Alkalimetallbatterie-Produktionsabfall-Wiedergewinnungsanlage 10, die im Folgenden kurz als Wiedergewinnungsanlage bezeichnet wird, aber auch Alkalimetallbatterie-Produktionsanlage genannt werden kann. Die Wiedergewinnungsanlage 10 besitzt einen Mischer 12 zum Mischen und/oder Dispergieren von Beschichtungsmaterial 14, das Aktivmaterial 16, Binder 18 und gegebenenfalls Additive 20 enthält. Das Aktivmaterial 16, der Binder 18 und gegebenenfalls die Additive 20 sind Primär-Beschichtungsmaterial 21, die aus Primärpartikel bestehen. Unter einem Primär-Beschichtungsmaterial 21 wird ein Material verstanden, das noch keinen Recyclingprozess im Sinne des hier beschriebenen Verfahrens durchlaufen hat und aus Rohstoffen synthetisiert wurde.

Die Wiedergewinnungsanlage 10 sitzt zudem eine Beschichtungsanlage 22 zum Beschichten von Stromableiterfolie 24 mit dem vom Mischer 12 kommenden Beschichtungsmaterial 14, sodass Elektrodenfolie 26 mit einer Beschichtung 27 entsteht, wie das Teilbild schematisch zeigt. Die Beschichtung 27 hat eine Beschichtungsdicke d₂₇ von beispielsweise d₂₇ = 0,2 mm.

Die Wiedergewinnungsanlage 10 kann einen Trockner 28 zum Trocknen der beschichteten Elektrodenfolie 26 aufweisen. Ebenfalls alternativ kann die Wiedergewinnungsanlage 10 einen Kalander 30 zum Kalandrieren der, gegebenenfalls getrockneten, Elektrodenfolie 26 aufweisen sodass die Beschichtung 27 die Beschichtungsdicke d₂₇ hat.

Die Wiedergewinnungsanlage 10 kann zudem einen Zuschneider 32 aufweisen, der ausgebildet ist zum Schneiden der kalandrierten Elektrodenfolie 26 auf eine vorgegebene Größe. Die so zugeschnittene Elektrodenfolie 26 wird dann mit zugeschnittener Elektrodenfolie der anderen Elektrode und dem Separator zum Elektroden-Separator-Verbund verbunden und von einem optionalen Zellfertiger 34 in ein Gehäuse oder eine Hülle verpackt und mit Elektrolyt 36 versehen, sodass die Alkalimetallbatterie 38 entsteht.

Bereiche der Elektrodenfolie 26, die nicht einer vorgegebenen Spezifikation entsprechen, werden von einer Entfernanlage 39 als Ausschuss-Elektrodenfolie 40 entfernt und können in eine optionale Zerkleinerungsvorrichtung 42 gelangen, sodass Zerkleinerungsmaterial 43 erhalten wird. Die Zerkleinerungsvorrichtung 42 ist beispielsweise eine Schneid-Zerkleinerungsvorrichtung. Das Zerkleinerungsmaterial 43 hat eine Partikelgröße von vorzugsweise höchstens 100 mm, insbesondere höchstens 50 mm. Beispielsweise besitzt die Zerkleinerungsvorrichtung 42 einem Bodensieb, das sicherstellt, dass nur Zerkleinerungsmaterial mit der angegebenen Partikelgröße die Zerkleinerungsvorrichtung 42 verlässt. Die Ausschuss-Elektrodenfolie 40 wird einer Entschichtungsanlage 44 zugeführt, beispielsweise einer Prallmühle. In der Entschichtungsanlage 44 wird die Beschichtung 27 zumindest teilweise von der Stromableiterfolie getrennt, sodass Trenngut 46 entsteht.

Die Entfernvorrichtung 39 umfasst beispielsweise eine Trennvorrichtung, mittels der die Ausschuss-Elektrodenfolie 40 von der Elektrodenfolie 26 abgetrennt wird. Sofern eine vollständige Bahn an Elektrodenfolie 26 als Ausschuss betrachtet wird, ist die Entfernvorrichtung diejenige Vorrichtung, die die Bahn, beispielsweise in Form eines Wickels, zur Entschichtungsanlage 44 befördert. Die Entfernvorrichtung 39 kann zudem Messgeräte aufweisen, mittels denen ermittelt wird, ob ein Bereich der Elektrodenfolie als Ausschuss-Elektrodenfolie klassifiziert wird oder vorgegebenen Qualitätskriterien entspricht.

Die Prallmühle enthält beispielsweise rotierende Schlagelemente, die eine Prallbelastung auf das Zerkleinerungsmaterial aufbringen und so die Beschichtung 27 von der fragmentierten Stromableiterfolie 24 trennt.

Optional kann in Materialflussrichtung M vor der Entschichtungsanlage 44 ein Trockner 45 angeordnet sein. Der Trockner 45 kann auch in Materialflussrichtung M vor der etwaig vorhandenen Zerkleinerungsvorrichtung 42 angeordnet sein.

Das Trenngut 46 gelangt in eine Klassiervorrichtung 48, die das Trenngut 46 in eine Folienfragment-Fraktion 50 und eine Beschichtungsmaterial-Fraktion 52. trennt. Es ist möglich, dass zumindest eine weitere Fraktion entsteht, das ist aber nicht notwendig. Die Klassiervorrichtung 48 ist vorzugsweise ein Siebklassierer oder umfasst einen Siebklassierer. Ein Siebklassierer weist zumindest ein Sieb mit genau einer Maschenweite aufweist. Die Maschenweite ist der lichte Abstand den Öffnungen des Siebs, der auch Siebschnitt genannt wird. Der Siebschnitt entspricht der Trennpartikelgröße xₜᵣₑₙₙ. Durch die Klassiervorrichtung 48 wird das Trenngut 46 in 2 Fraktionen klassiert. Die Fraktion mit Partikeln unterhalb der Trennpartikelgröße xₜᵣₑₙₙ ist die Beschichtungsmaterial-Fraktion 52. Die Fraktion mit Partikeln mit mindestens der Trennpartikelgröße xₜᵣₑₙₙ ist die Folienfragment-Fraktion 50.

Alternativ oder zusätzlich weist die Klassiervorrichtung 48 einen Sichter auf. Um zu gewährleisten, dass die Partikel in der Fraktion mit den kleineren Partikelgrößen stets kleiner sind als die Trennpartikelgröße xₜᵣₑₙₙ, ist es günstig, nicht aber notwendig, dass in Materialflussrichtung hinter dem Sichter ein Siebklassierer angeordnet ist, dessen Siebschnitt höchstens der Trennpartikelgröße entspricht.

Die Beschichtungsmaterial-Fraktion 52 hat unmittelbar nach dem Trennen von der der Folienfragment-Fraktion 50 einen Recycling-Binderanteil B₅₂ von beispielsweise B₅₂ = 3 Gewichtsprozent. Das Primär-Beschichtungsmaterial 21 hat einen Primärmaterial-Binderanteil B₂₁ von beispielsweise 4 Gewichtsprozent. Das zum Beschichten verwendete Beschichtungsmaterial-Fraktion, das Primär-Beschichtungsmaterial 21 und die Beschichtungsmaterial-Fraktion 52 enthält, hat einen Beschichtungsmaterial-Binderanteil B₁₄ von ebenfalls 4 Gewichtsprozent. Zum Ausgleich des geringeren Binderanteils in der Beschichtungsmaterial-Fraktion 52 wird zusätzlicher Binder zugegeben. Ist der Recycling-Binderanteil größer als der Beschichtungsmaterial-Binderanteil B₁₄, wird zusätzlich Aktivmaterial und gegebenenfalls Additive zugegeben.

Die Klassiervorrichtung 48 ist mit dem Mischer 12 zum Zuführen zumindest von Teilen der Beschichtungsmaterial-Fraktion 52 zum Mischer 12 verbunden.

Der Mischer 12, die Beschichtungsanlage 22, gegebenenfalls der Trockner 28, der Kalander 30 und der Schneider 32 sind Teil eines Produktionszweigs 56 der Alkalimetallbatterie-Produktionsanlage 54. Die optionale Zerkleinerungsvorrichtung 42, die Entschichtungsanlage 44 und die Klassiervorrichtung 48 sind Teil eines Wiedergewinnungszweigs 58 der Alkalimetallbatterie-Produktionsanlage 10.

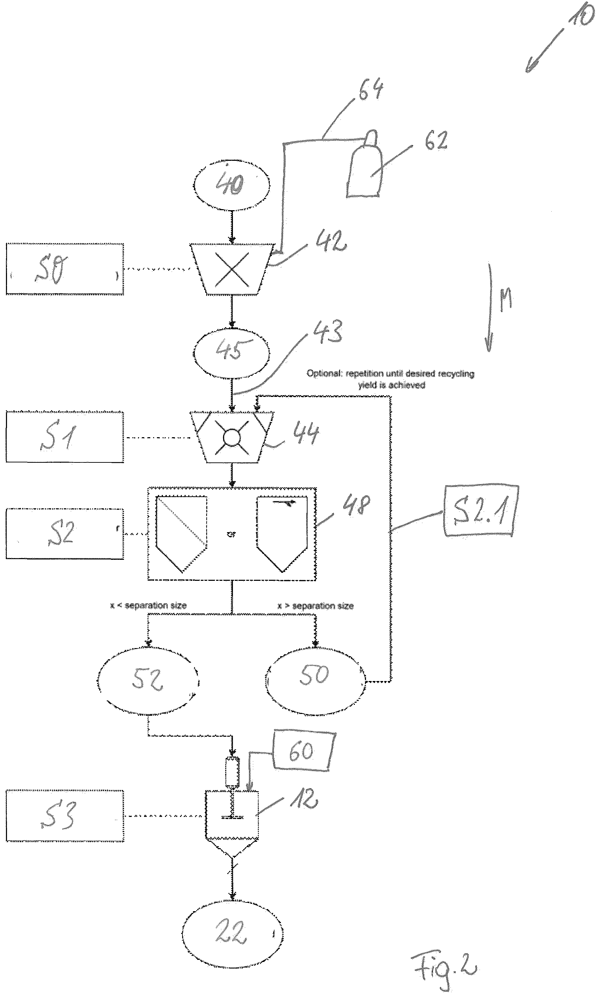

Figur 2 zeigt ein Flussdiagramm einer Vorrichtung zum Durchführen eines erfindungsgemäßen Verfahrens. Ein erster, optionaler Schritt S0 des Zerkleinerns wird in der Zerkleinerungsvorrichtung 42 durchgeführt. Der Schritt S1 des Entschichtens erfolgt in der Entschichtungsanlage 44. Der Schritt S2 des Klassierens erfolgt in der Klassiervorrichtung 48, die Beschichtungsmaterial-Fraktion 52 wird im Schritt S3 dem Mischer 12 zugeführt, wo sie mit Primär-Beschichtungsmaterial 60 vermischt wird. Das Primär-Beschichtungsmaterial 60 ist aus Rohstoffen synthetisiert und hat noch kein Recyclingverfahren im Sinne dieser Erfindung durchlaufen.

Gemäß eines optionalen Schritts S2.1 wird ein Teil der Folienfragment-Fraktion in die Entschichtungsanlage 44 zurückgeführt. Beispielsweise wird die Folienfragment-Fraktion 50 klassiert, insbesondere gesiebt und/oder gesichtet, und die Partikel oberhalb einer kritischen Partikelgröße xₖᵣᵢₜ zurückgeführt. Partikelgröße xₖᵣᵢₜ ist beispielsweise größer oder gleich der Trennpartikelgröße xₜᵣₑₙₙ.

Es ist möglich, dass die Zerkleinerungsvorrichtung 42 und/oder die Entschichtungsanlage 44 und/oder die Klassiervorrichtung 48 mit einer Inertgasquelle 62 verbunden ist. Dadurch kann das Zerkleinern, Entschichten und/oder Klassieren unter Inertgas 64 erfolgen, was unerwünschte chemische Reaktionen des Beschichtungsmaterials vermindert oder sogar verhindert.

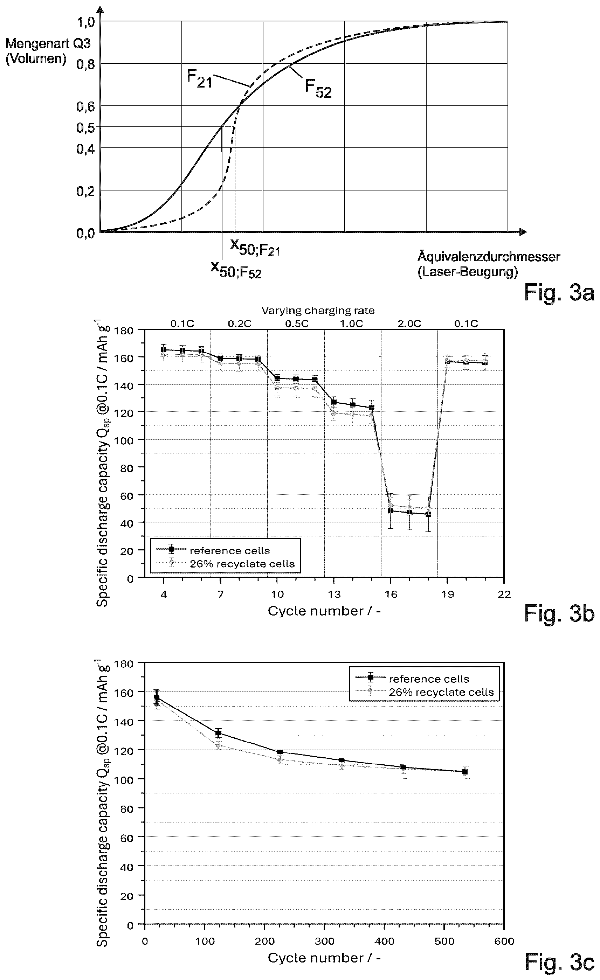

Figur 3a zeigt eine idealisierte Beschichtungsmaterialfraktion-Partikelgrößenverteilung F₅₂ der Beschichtungsmaterial-Fraktion 52. Die Beschichtungsmaterialfraktion-Partikelgrößenverteilung F₅₂ trägt auf der y-Achse das Volumen der Partikel der Beschichtungsmaterial-Fraktion 52 unterhalb eines Äquivalentdurchmessers x über dem Äquivalentdurchmesser x auf der x-Achse auf. Die Beschichtungsmaterialfraktion-Partikelgrößenverteilung F₅₂ hängt ab von der Dauer des Entschichtens und von der Intensität der mechanischen Einwirkung. Je länger entschichtet wird und je größer die mechanische Einwirkung, desto kleiner werden in der Regel die Partikel. Die Beschichtungsmaterialfraktion-Partikelgrößenverteilung F₅₂ wird mittels Laserbeugung nach ISO 13320: 2020 bestimmt.

Der Median ist derjenige Äquivalenzdurchmesser x₅₀, für den gilt, dass Partikel mit höchstens diesem Äquivalenzdurchmesser 50 Volumenprozent aller Partikel haben.

Das Primär-Beschichtungsmaterial 21 hat eine Primärpartikel-Partikelgrößenverteilung F₂₁, die in Figur 3 beispielhaft und ebenfalls idealisiert gezeigt ist. Es ist zu erkennen, dass sich die beiden Mediane der Partikelgrößenverteilungen F₅₂, F₅₂ nur unwesentlich voneinander unterscheiden, sodass sie einander entsprechen.

Figur 3b zeigt die spezifische Entladekapazität in Milliamperestunden pro Gramm Aktivmaterial einer Alkalimetallbatterie ausschließlich aus Primärmaterial (eckige Symbole) und mit einem Anteil von 26 Gewichtsprozent an mit dem erfindungsgemäßen Verfahren rezykliertem Beschichtungsmaterial (runde Symbole). Zunächst wurden beide Arten von Alkalimetallbatterien mit einem Strom geladen, der ein Zehntel so groß ist wie der Strom, der die Alkalimetallbatterien innerhalb von einer Stunde komplett aufladen würde (0,1 C/h, wird oft als 0,1C bezeichnet). Danach wurden sie mit diesem Strom (0,1C) vollständig entladen und die Entladekapazität der Alkalimetallbatterie ermittelt. Es ist zu erkennen, dass sich die beiden Arten von Alkalimetallbatterien im Rahmen der Messunsicherheit nicht unterscheiden. Die Ladekapazität ist die elektrische Ladung, die die Alkalimetallbatterie (zwischen Entladeschluss-Spannung und Ladeschluss-Spannung) speichern kann.

Figur 3c zeigt die spezifische Entladekapazität bei wiederholtem Laden und Entladen mit 0,1C. Es ist zu erkennen, dass sich die spezifische Entladekapazität der Alkalimetallbatterie mit 26 Gewichtsprozent rezykliertem Beschichtungsmaterial im Rahmen der Messunsicherheit kaum unterscheiden.

### Bezugszeichenliste

| | | | |
|---|---|---|---|
| 10 | Alkalimetallbatterie-Produktions- abfall-Wiedergewinnungsanlage, Alkalimetallbatterie-Produktions- anlage | 54 | Alkalimetallbatterie-Produktionszweig |
| | | 56 | Produktionszweig |
| | | 58 | Wiedergewinnungszweig |
| 12 | Mischer | 60 | Primär-Beschichtungsmaterial |
| 14 | Beschichtungsmaterial | 62 | Inertgasquelle |
| 16 | Aktivmaterial | | |
| 18 | Binder | B | Binderanteil |
| | | B₁₄ | Beschichtungsmaterial-Binderan- |
| 20 | Additive | | teil |
| 21 | Primär-Beschichtungsmaterial | B₂₁ | Primärmaterial-Binderanteil |
| 22 | Beschichtungsanlage | B₅₂ | Recycling-Binderanteil |
| 24 | Stromableiterfolie | d₂₇ | Beschichtungsdicke |
| 26 | Elektrodenfolie | F₅₁ | Primärmaterial-Partikelgrößen- |
| 27 | Beschichtung | | verteilung |
| 28 | Trockner | F₅₂ | Beschichtungsmaterialfraktion-Partikelgrößenverteilung |
| 30 | Kalander | M | Materialflussrichtung |
| 32 | Schneider | x | Äquivalentdurchmesser |
| 34 | Zellfertiger | xₖᵣᵢₜ | kritische Partikelgröße |
| 36 | Elektrolyt | xₜᵣₑₙₙ | Trennpartikelgröße |
| 38 | Alkalimetallbatterie | | |
| 39 | Entfernvorrichtung | | |
| 40 | Ausschuss-Elektrodenfolie | | |
| 42 | Zerkleinerungsvorrichtung | | |
| 43 | Zerkleinerungsmaterial | | |
| 44 | Entschichtungsanlage | | |
| 46 | Trenngut | | |
| 48 | Klassiervorrichtung | | |
| 50 | Folienfragment-Fraktion | | |
| 52 | Beschichtungsmaterial-Fraktion | | |

## Patentansprüche

1. Verfahren zum Rezyklieren von Alkalimetallbatterie-Produktionsabfall in Form von Ausschuss-Elektrodenfolie (40), die
(i) eine Stromableiterfolie (24) und
(ii) eine Beschichtung (27) der Stromableiterfolie (24) aufweist,
(iii) wobei die Beschichtung (27) Aktivmaterial (16) und einen Binder (18) enthält,
mit den Schritten
(a) Entschichten der Ausschuss-Elektrodenfolie (40), insbesondere mittels einer Prallmühle (44), eines Prallsichters und/oder einer Luftstrahlmühle, sodass Trenngut (46) entsteht,
(b) Klassieren des Trennguts (46), sodass eine Beschichtungsmaterial-Fraktion (52) und eine Folienfragment-Fraktion (50) erhalten werden, und
(c) Verwenden der Beschichtungsmaterial-Fraktion (52) zum Beschichten von Stromableiterfolie (24), sodass Elektrodenfolie (26) erhalten wird.

2. Verfahren nach Anspruch 1, **dadurch gekennzeichnet, dass**
das Entschichten zumindest teilweise ein Zerkleinern ist und/oder
die Ausschuss-Elektrodenfolie (40) vor dem Entschichten zerkleinert wird.

3. Verfahren nach einem der vorstehenden Ansprüche, **dadurch gekennzeichnet, dass** die Beschichtungsmaterial-Fraktion (52) eine Beschichtungsmaterialfraktion-Partikelgrößenverteilung (F₅₂) hat, die das Volumen der Partikel unterhalb eines Äquivalentdurchmessers (x) über den Äquivalentdurchmesser (x) aufträgt, und/oder das Entschichten und das Klassieren so durchgeführt werden, dass die Beschichtungsmaterialfraktion-Partikelgrößenverteilung (F₅₂) einer Primärpartikel-Partikelgrößenverteilung (F₂₁) entspricht.

4. Verfahren nach einem der vorstehenden Ansprüche, **dadurch gekennzeichnet, dass** das Klassieren
(a) so durchgeführt wird, dass die Beschichtungsmaterial-Fraktion (52) höchstens 0,1 Gewichtsprozent, insbesondere höchstens 0,01 Gewichtsprozent, der Partikel größer sind als eine Trennpartikelgröße (xₜᵣₑₙₙ),
wobei die Trennpartikelgröße (xₜᵣₑₙₙ) höchstens das Fünffache einer Aktivmaterial-Partikelgröße (x_{AM}) in Form der x₉₀-Partikelgröße des Aktivmaterials beträgt und/oder
(b) das Klassieren ein Siebklassieren umfasst, wobei eine Maschenweite höchstens 100 µm, insbesondere höchstens 80 µm, insbesondere höchstens 65 µm, beträgt.

5. Verfahren nach einem der vorstehenden Ansprüche, **dadurch gekennzeichnet, dass** das Klassieren so durchgeführt wird, dass
(a) ein Aluminium-Gehalt an metallischem Aluminium in der Beschichtungsmaterial-Fraktion (52) höchstens 1 Gewichtsprozent, insbesondere höchstens 0,5 Gewichtsprozent, beträgt und/oder
(b) ein Kupfer-Gehalt an metallischem Kupfer in der Beschichtungsmaterial-Fraktion (52) höchstens 1 Gewichtsprozent, insbesondere höchstens 0,5 Gewichtsprozent, beträgt und/oder
(c) ein Eisen-Gehalt unter 0,1 Gewichtsprozent.

6. Verfahren nach einem der vorstehenden Ansprüche, **gekennzeichnet durch** den Schritt: vor dem Entschichten Trocknen der Ausschuss-Elektrodenfolie (40) und/oder vor dem Entschichten Zerkleinern der Ausschuss-Elektrodenfolie (40), sodass Zerkleinerungsmaterial (43) entsteht.

7. Verfahren nach einem der vorstehenden Ansprüche, **dadurch gekennzeichnet, dass**
(a) das Zerkleinern, Entschichten und/oder Klassieren unter Inertgas (64) durchgeführt wird und/oder
(b) das Beschichtungsmaterial (14) nach dem Entschichten, insbesondere nach dem etwaigen Zerkleinern, zumindest im Wesentlichen keinen Kontakt mit Fluorwasserstoff hat.

8. Verfahren nach einem der vorstehenden Ansprüche, **gekennzeichnet durch** den Schritt Rückführen zumindest eines Teils der Folienfragment-Fraktion (50) zum erneuten Entschichten.

9. Verfahren nach einem der vorstehenden Ansprüche, insbesondere Verfahren zum Herstellen von Alkalimetallbatterien, mit den Schritten
(a) Beschichten von Stromableiterfolie (24) mit Beschichtungsmaterial (14), sodass Elektrodenfolie (26) entsteht,
(b) Entfernen eines Teils der Elektrodenfolie (26) als Ausschuss-Elektrodenfolie (40),
(c) danach Durchführen der Schritte (a) bis (c) von Anspruch 1,
(d) danach Herstellen der Alkalimetallbatterien (38) unter Verwendung der Beschichtungsmaterial-Fraktion (52).

10. Verfahren nach Anspruch 9, **gekennzeichnet durch** die Schritte Vermischen der Beschichtungsmaterial-Fraktion (52) mit Primär-Beschichtungsmaterial (21), sodass das Beschichtungsmaterial (14) erhalten wird, mit dem die Stromableiterfolie (24) beschichtet wird.

11. Verfahren nach Anspruch 9 oder 10, **dadurch gekennzeichnet, dass**
(a) das Beschichtungsmaterial (14) einen Beschichtungsmaterial-Binderanteil (B₁₄) an Binder (18) aufweist und
(b) die Beschichtungsmaterial-Fraktion (52) unmittelbar nach dem Trennen der Beschichtungsmaterial-Fraktion (52) von der der Folienfragment-Fraktion (50) einen Recycling-Binderanteil (B₅₂) aufweist und
(c) der Recycling-Binderanteil (B₅₂) zwischen der Hälfte und dem Doppelten des Beschichtungsmaterial-Binderanteils (B₁₄) beträgt.

12. Verfahren nach einem der vorstehenden Ansprüche, **dadurch gekennzeichnet, dass** das Herstellen der Alkalimetallbatterien (38) unter Verwendung der Elektrodenfolie (26) so durchgeführt wird, dass eine Beschichtungsdicke (d₂₇) der Beschichtung (27) der Elektrode zumindest 1,5-fach so groß ist wie die Trennpartikelgröße (xₜᵣₑₙₙ).

13. Alkalimetallbatterie-Produktionsabfall-Wiedergewinnungsanlage (10) mit
(A) einem Mischer (12) zum Mischen und/oder Dispergieren von Beschichtungsmaterial (14),
(B) einer Beschichtungsanlage (22) zum Beschichten von Stromableiterfolie (24) mit dem vom Mischer (12) kommenden Beschichtungsmaterial (14), sodass Elektrodenfolie (26) entsteht,
(C) optional einer Entfernvorrichtung (39) zum Entfernen eines Teils der Elektrodenfolie (26) als Ausschuss-Elektrodenfolie (40),
**gekennzeichnet durch**
(D) eine Entschichtungsanlage (44) zum Entschichten von Ausschuss-Elektrodenfolie (40), insbesondere eine Prallmühle, einen Prallsichter und/oder einer Luftstrahlmühle, sodass Trenngut (46) entsteht,
wobei die Entschichtungsanlage (44) in Materialflussrichtung (M) der Elektrodenfolie (26) hinter der Beschichtungsanlage angeordnet ist, und
(E) eine Klassiervorrichtung (48) zum Klassieren des Trennguts (46) zum Erzeugen einer Beschichtungsmaterial-Fraktion und einer Folienfragment-Fraktion,
(F) wobei die Klassiervorrichtung (48) mit dem Mischer (12) zum Zuführen zumindest von Teilen der Beschichtungsmaterial-Fraktion zum Mischer (12) verbunden ist.

14. Alkalimetallbatterie-Produktionsabfall-Wiedergewinnungsanlage (10) nach Anspruch 13, **gekennzeichnet durch**
eine Zerkleinerungsvorrichtung (42) zum Zerkleinern der Ausschuss-Elektrodenfolie (40), sodass Zerkleinerungsmaterial (43) erhalten wird,
wobei die Zerkleinerungsvorrichtung (42) in Materialflussrichtung (M) der Ausschuss-Elektrodenfolie (40) (26) hinter der Beschichtungsanlage angeordnet ist und
wobei die Zerkleinerungsvorrichtung (42) in Materialflussrichtung (M) des Zerkleinerungsmaterials (43) vor der Entschichtungsanlage (44) angeordnet ist.
